# EUROPEAN PATENT APPLICATION

(11) **EP 4 796 969 A1**
(43) Date of publication of application: **26.08.2026**
(21) Application number: 24884140.5
(22) Date of filing: 16.08.2024
(51) Int. Cl.: G02B 6/42, G02B 6/255

(54) **PACKAGING STRUCTURE, OPTICAL MODULE AND OPTICAL SYSTEM**

(30) Priority: 01.11.2023 CN 202311443484
(71) Applicant: HUAWEI TECHNOLOGIES CO., LTD., Shenzhen 518129 (CN)
(72) Inventor: ZHANG, Xueming, Shenzhen, Guangdong 518129 (CN); HUANG, Yi, Shenzhen, Guangdong 518129 (CN); XIAO, Pengcheng, Shenzhen, Guangdong 518129 (CN); ZONG, Fei, Shenzhen, Guangdong 518129 (CN); XIA, Yuan, Shenzhen, Guangdong 518129 (CN); YANG, Yiting, Shenzhen, Guangdong 518129 (CN); GAO, Fei, Shenzhen, Guangdong 518129 (CN)
(74) Representative: Thun, Clemens
(86) International application number: PCT/CN2024/112751
(87) International publication number: WO 2025/092133

(57) **Abstract**

This application provides a package structure, an optical module, and an optical system. The package structure includes a photonics integrated circuit, a fiber array, and a substrate. A spot size converter is disposed in the photonics integrated circuit, and the spot size converter includes a cantilever beam waveguide and a first groove. The fiber array includes a fiber, a base, and a lid, the base includes a second groove, the second groove is configured to accommodate the fiber, and the lid is snap-fitted to the base. The photonics integrated circuit is disposed on an upper surface of the substrate, the base or the lid is disposed on the upper surface of the substrate, and the cantilever beam waveguide is coupled to the fiber. In the package structure, disposing the photonics integrated circuit and the fiber array on the upper surface of the substrate together and avoiding using an additional support part can ensure mechanical stability of the package structure, and reduce a change in stress near the cantilever beam waveguide caused by a temperature change, displacement, external force application, or the like in the package structure, thereby implementing low-stress packaging.

## Description

This application claims priority to Chinese Patent Application No. 202311443484.2, filed with the China National Intellectual Property Administration on November 1, 2023, and entitled "PACKAGE STRUCTURE, OPTICAL MODULE, AND OPTICAL SYSTEM".

### TECHNICAL FIELD

This application relates to the field of optical communication, and in particular, to a package structure, an optical module, and an optical system.

### BACKGROUND

With rapid development of big data and cloud computing, network traffic of a data center presents a rapid growth trend, which poses greater challenges to data center networks and optical interconnect technologies. A core of a silicon photonics technology is to use silicon as a basic material for optical devices, and construct optical elements on a photonics integrated circuit by using an advanced fabrication process, such as an optical waveguide, a modulator, and an optical switch. These devices can implement functions such as generation, transmission, regulation, and detection of optical signals.

Packaging of the photonics integrated circuit (photonics integrated circuit, PIC) and a fiber array (fiber array, FA) is one of important technical difficulties in the silicon photonics technology. Because a mode field diameter of a waveguide in the photonics integrated circuit is small, and does not match a mode field diameter of a standard fiber, a large coupling loss is caused if the waveguide is directly coupled to the fiber. In a packaging form, a spot size converter (spot size converter, SSC) may be disposed at an edge of the photonics integrated circuit, which may be understood as one end of the photonics integrated circuit, so that a spot size of the waveguide matches a spot size of the fiber. The spot size converter may be in a cantilever beam form. The bottom of the cantilever beam-type spot size converter is etched to form a first groove, and the waveguide is suspended relative to the first groove to form a cantilever beam waveguide. However, a cantilever beam structure is stress-sensitive. For example, a change of an ambient temperature, external force application, or movement of a package structure may cause stress on the cantilever beam waveguide, which causes a change in an optical transmission characteristic of the cantilever beam waveguide. High stress may even cause damage to a mechanical structure of the waveguide. Therefore, how to implement low-stress packaging of an end-face coupling structure is an urgent problem to be resolved.

### SUMMARY

This application provides a package structure, an optical module, and an optical system. A photonics integrated circuit and a fiber array are disposed on an upper surface of a same substrate, to implement low-stress packaging of an end-face coupling structure.

According to a first aspect, a package structure is provided, including a photonics integrated circuit, a fiber array, and a substrate. A spot size converter is disposed in the photonics integrated circuit, and the spot size converter includes a cantilever beam waveguide and a first groove. There is a gap between the cantilever beam waveguide and the first groove. The fiber array includes a fiber, a base, and a lid, the base includes a second groove, the second groove is configured to accommodate the fiber, and the lid is snap-fitted to the base. The photonics integrated circuit is disposed on an upper surface of the substrate, the base or the lid is disposed on the upper surface of the substrate, and the cantilever beam waveguide is coupled to the fiber. In the package structure, disposing the photonics integrated circuit and the fiber array on the upper surface of the substrate together and avoiding using an additional support part like a spacer can ensure mechanical stability of the package structure, and reduce a change in stress near the cantilever beam waveguide caused by a temperature change, displacement, external force application, or the like in the package structure, thereby implementing low-stress packaging.

With reference to the first aspect, in some implementations of the first aspect, that the cantilever beam waveguide is coupled to the fiber includes: A tail end of the cantilever beam waveguide is coupled to a tail end of the fiber. Therefore, in a packaging solution in which the cantilever beam waveguide is directly coupled to the fiber, disposing the photonics integrated circuit and the fiber array on an upper surface of a same substrate avoids a problem that excessively large local stress occurs in a coupling area of the cantilever beam waveguide and the fiber due to the temperature change, displacement, external force application, or the like, thereby reducing a packaging loss.

With reference to the first aspect, in some implementations of the first aspect, projections of the fiber and the photonics integrated circuit on the substrate do not overlap. In this way, mechanical damage, for example, a folding loss, generated because the fiber is excessively extended to the photonics integrated circuit is avoided being caused on the fiber, and stress between the cantilever beam waveguide and the fiber is reduced, thereby reducing the packaging loss.

With reference to the first aspect, in some implementations of the first aspect, there is a pitch between projections of the base and the photonics integrated circuit on the substrate, and the fiber extends at one end, adjacent to the photonics integrated circuit, outside the base. The base is moved backwards, so that the stress between the cantilever beam waveguide and the fiber can be reduced, and the packaging loss can be reduced.

With reference to the first aspect, in some implementations of the first aspect, there is a pitch between projections of the lid and the photonics integrated circuit on the substrate, and the fiber extends at one end, adjacent to the photonics integrated circuit, outside the lid. The lid is moved backwards, so that the fiber can be identified conveniently and a dispensing action can be performed conveniently in a fiber array preparation phase, thereby optimizing a preparation procedure. In addition, the stress between the cantilever beam waveguide and the fiber can be reduced, and the packaging loss can be reduced.

With reference to the first aspect, in some implementations of the first aspect, there is a pitch between projections of the base and the photonics integrated circuit on the substrate, there is a pitch between projections of the lid and the photonics integrated circuit on the substrate, and the fiber extends at one end, adjacent to the photonics integrated circuit, outside the base and the lid. The base and the lid are moved backwards, so that the fiber can be identified conveniently and a dispensing action can be performed conveniently in a fiber array preparation phase, thereby optimizing a preparation procedure. In addition, the stress between the cantilever beam waveguide and the fiber can be reduced, and the packaging loss can be reduced.

With reference to the first aspect, in some implementations of the first aspect, a material of the substrate is fused silica, an Invar alloy, a Kovar alloy, silicon carbide, silicon, aluminum oxide, aluminum nitride, or a tungsten copper alloy; and/or a thermal expansion rate of the substrate is 0.3 ppm/°C to 10 ppm/°C. Therefore, it is ensured that the package structure can ensure low stress of the package structure in a "three-temperature" environment, and mechanical stability of the package structure is ensured. In some implementations, the material of the substrate is aluminum oxide, aluminum nitride, or a tungsten copper alloy; and/or the thermal expansion rate of the substrate is 4 ppm/°C to 8 ppm/°C. In this way, a material used by the substrate further matches expansion rates of materials used by the fiber array and the photonics integrated circuit, to ensure that the package structure can ensure the low stress of the package structure in the "three-temperature" environment, and ensure mechanical stability of the package structure.

With reference to the first aspect, in some implementations of the first aspect, a first bonding portion is disposed at a coupling position between the cantilever beam waveguide and the fiber, where the first bonding portion is made of silicone; and/or a modulus of the first bonding portion is less than 1 MPa; and/or a refractive index of the first bonding portion ranges from 1.35 to 1.45; and/or a thermal expansion rate of the first bonding portion is less than 100 ppm/°C. In this way, an optical signal is limited to be transmitted between the cantilever beam waveguide and the fiber. In addition, a "soft connection" between the cantilever beam waveguide and the fiber is implemented, local stress is reduced, an increase in local stress of the cantilever beam waveguide or the fiber caused by the temperature change, displacement, external force application, or the like in the package structure is avoided, and it is ensured that the package structure can ensure the low stress of the package structure in the "three-temperature" environment.

With reference to the first aspect, in some implementations of the first aspect, a second bonding portion is disposed in the first groove; and the second bonding portion is in contact with the cantilever beam waveguide, or the second bonding portion wraps the cantilever beam waveguide, where the second bonding portion is made of silicone; and/or a modulus of the second bonding portion is less than 1 MPa; and/or a refractive index of the second bonding portion ranges from 1.35 to 1.45; and/or a thermal expansion rate of the second bonding portion is less than 100 ppm/°C. In this way, the cantilever beam waveguide is protected, the local stress is reduced, mechanical damage to the cantilever beam waveguide caused by the temperature change, displacement, external force application, or the like is avoided. In addition, transmission of the optical signal is limited in the cantilever beam waveguide, and it is ensured that the second bonding portion generates large thermal expansion in the "three-temperature" environment, to avoid mechanical damage to the cantilever beam waveguide.

With reference to the first aspect, in some implementations of the first aspect, a bonding layer is disposed between the fiber array and/or the photonics integrated circuit and the substrate, where the bonding layer is made of epoxy resin or acrylic acid; and/or a shrinkage rate of the bonding layer is less than 0.3%. In this way, the fiber array and/or the photonics integrated circuit are/is avoided being shifted, and the packaging loss is reduced. The bonding layer 160 may be made of epoxy resin or acrylic acid, to prevent the fiber array and/or the photonics integrated circuit from being shifted, and reduce the packaging loss.

With reference to the first aspect, in some implementations of the first aspect, a glue guiding groove is disposed on the substrate, and the glue guiding groove is located between the photonics integrated circuit and the fiber array. The glue guiding groove is configured to guide a flow when glue is dripped onto the first bonding portion and the second bonding portion in a packaging phase, to avoid pollution caused by contact between glue of the first bonding portion and the second bonding portion and glue of the bonding layer.

With reference to the first aspect, in some implementations of the first aspect, the spot size converter includes N cantilever beam waveguides, the fiber array includes N fibers, the N cantilever beam waveguides one-to-one correspond to the N fibers, a cantilever beam waveguide in the N cantilever beam waveguides is coupled to a fiber corresponding to the cantilever beam waveguide, and N is a positive integer. In some implementations, N is a positive integer greater than or equal to 2. When the package structure is a multi-channel package structure, the photonics integrated circuit and the fiber array are disposed on the same substrate, to improve stability of the package structure. This can avoid high stress generated on a coupling part between the N fibers and the N cantilever beam waveguides, and reduce a limitation on the fiber in the fiber array.

With reference to the first aspect, in some implementations of the first aspect, the package structure includes M fiber arrays, the photonics integrated circuit includes M spot size converters, the M fiber arrays one-to-one correspond to the M spot size converters, a fiber array in the M fiber arrays is coupled to a corresponding spot size converter, and M is a positive integer. In some implementations, M is a positive integer greater than or equal to 2. The package structure may be a co-packaged optics structure, to shorten a transmission distance of the optical signal, reduce the packaging loss, and reduce system costs and power consumption.

According to a second aspect, an optical module including the package structure according to any one of the first aspect and the possible implementations of the first aspect and an optical component is provided. The optical component is optically connected to the package structure, and the optical component is configured to receive and/or send an optical signal.

According to a third aspect, an optical system is provided, including an optoelectronic device and the optical module according to any one of the second aspect and the possible implementations. The optoelectronic device is connected to the optical module, and the optoelectronic device is any one of an optical switch, a fiber router, and a fiber network interface card. The optoelectronic device may include a plurality of ports, each of the plurality of ports corresponds to one optical transmission channel, and a port in the plurality of ports is connected to the optical module, to implement multi-channel and high-rate data transmission.

### BRIEF DESCRIPTION OF DRAWINGS

FIG. 1(a) to FIG. 1(d) are a diagram of a package structure according to an embodiment of this application;
FIG. 2 shows a spot size converter according to an embodiment of this application;
FIG. 3 is a diagram of another package structure according to an embodiment of this application;
FIG. 4(a) to FIG. 4(c) are a diagram of another package structure according to an embodiment of this application;
FIG. 5 is a diagram of another package structure according to an embodiment of this application;
FIG. 6 is a diagram of an optical module according to an embodiment of this application; and
FIG. 7 is a diagram of an optical system according to an embodiment of this application.

### DESCRIPTION OF EMBODIMENTS

The following describes technical solutions of this application with reference to accompanying drawings.

The terms "first" and "second" mentioned below are merely intended for a purpose of description, and shall not be understood as an indication or implication of relative importance or implicit indication of a quantity of indicated technical features. Therefore, a feature limited by "first" or "second" may explicitly or implicitly include one or more features.

Reference to "one embodiment", "some embodiments", or the like described in this specification means that a specific feature, structure, or characteristic described with reference to the embodiment is included in one or more embodiments of this application. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

In the descriptions of embodiments of this application, orientations or position relationships indicated by terms "up", "down", "vertical", "horizontal", and the like are defined relative to orientations or positions in which parts are schematically placed in the accompanying drawings. It should be understood that these directional terms are relative concepts, and are used for relative description and clarification, but not indicate or imply that a specified apparatus or component needs to have a specific orientation or be constructed and operated in a specific orientation. These directional terms may vary based on changes of positions of the parts in the accompanying drawings, and therefore cannot be understood as a limitation on this application.

In the following embodiments of this application, the terms "include", "have", and any variants thereof are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

In embodiments of this application, terms such as "example" or "for example" are used to represent giving an example, an illustration, or a description. Any embodiment or design scheme described with "example" or "for example" should not be explained as being more preferred or having more advantages than another embodiment or design scheme. The term like "example" or "for example" is used to present a related concept in a specific manner for ease of understanding.

With rapid development of big data and cloud computing, network traffic of a data center presents a rapid growth trend, which poses greater challenges to data center networks and optical interconnect technologies. In a conventional data center network, use of an electronic interconnect technology has some limitations, for example, high power consumption, limited bandwidth, and a high delay. To meet requirements of high bandwidth, a low delay, and energy saving, a silicon photonics technology has gained significant attention. A core of a silicon photonics technology is to use silicon as a basic material for optical devices, and construct optical elements on a photonics integrated circuit by using an advanced fabrication process, such as an optical waveguide, a modulator, and an optical switch. These devices can implement functions such as generation, transmission, regulation, and detection of optical signals. Compared with a conventional optical device, the silicon photonics technology has advantages such as low manufacturing cost, high integration, and high compatibility.

Packaging of the photonics integrated circuit (photonics integrated circuit, PIC) and a fiber array (fiber array, FA) is one of important technical difficulties in the silicon photonics technology. Because a mode field diameter of a waveguide in the photonics integrated circuit is small, and does not match a mode field diameter of a standard fiber, a large coupling loss is caused if the waveguide is directly coupled to the fiber. Currently, package structures of the photonics integrated circuit and the fiber may be classified into an end-face coupling package structure, a grating coupling package structure, and the like. The end-face coupling package structure may be a package structure formed through a direct optical connection or an indirect optical connection between an end face of the photonics integrated circuit and an end face of the fiber. The grating coupling package structure may be a package structure formed by optically connecting the photonics integrated circuit and the fiber via a grating. Although the grating coupling package structure has advantages such as large tolerance and easy adjustment, the grating generates a loss of an optical signal. The end-face coupling package structure becomes a main form of a coupling package structure due to advantages such as a low packaging loss and a small size.

As a packaging form of an end-face coupling structure, a spot size converter (spot size converter, SSC) may be disposed at an edge of the photonics integrated circuit, which may be understood as one end of the photonics integrated circuit, so that a spot size of the waveguide matches a spot size of the fiber. The spot size converter may be in a cantilever beam form. The bottom of the cantilever beam-type spot size converter is etched to form a first groove, and the waveguide is suspended relative to the first groove to form a cantilever beam waveguide. Air in the first groove is used to limit a transmitted optical signal to be transmitted in the cantilever beam waveguide, to implement mode field matching and reduce a packaging loss. However, a cantilever beam structure is stress-sensitive. For example, a change of an ambient temperature, external force application, or movement of a package structure may cause stress on the cantilever beam waveguide, which causes a change in an optical transmission characteristic of the cantilever beam waveguide. High stress may even cause damage to a mechanical structure of the waveguide. Therefore, how to implement low-stress packaging of an end-face coupling structure is an urgent problem to be resolved.

In view of this, embodiments of this application provide a package structure, an optical module, and an optical system. A photonics integrated circuit and a fiber array are disposed on an upper surface of a same substrate, to implement low-stress packaging of an end-face coupling structure.

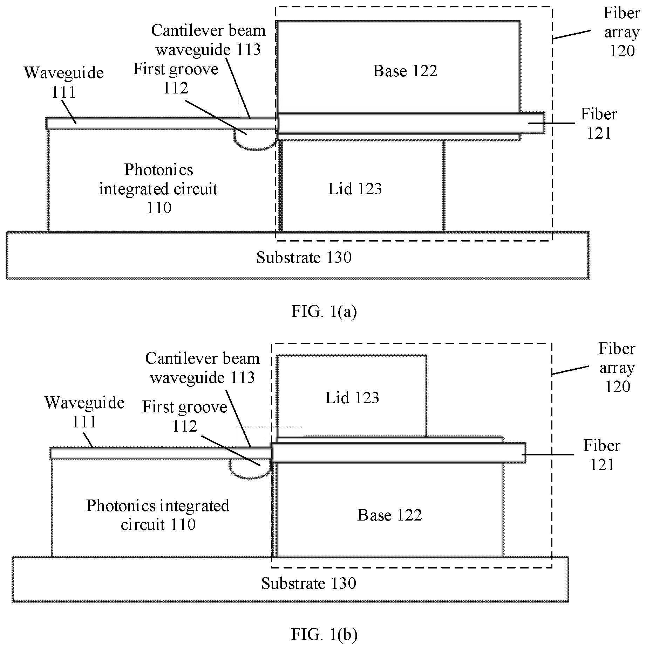

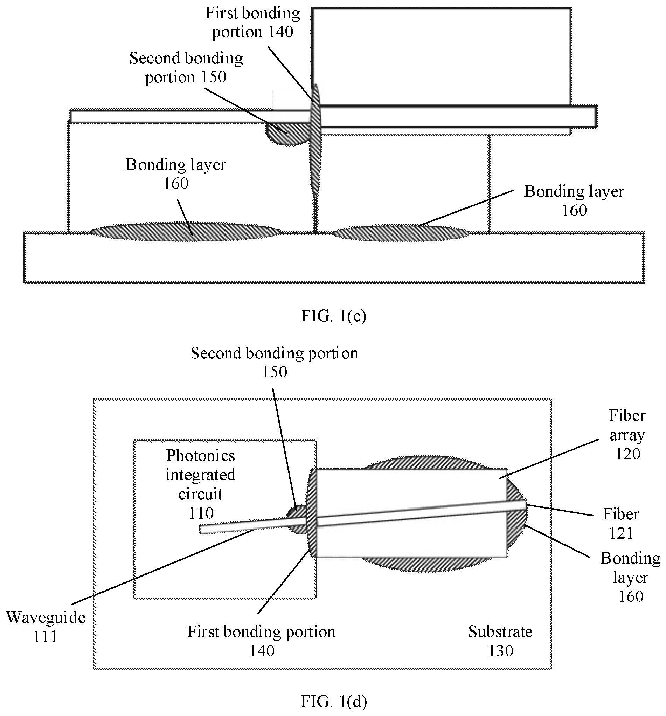

FIG. 1(a) to FIG. 1(d) are a diagram of a package structure according to an embodiment of this application. FIG. 1(a) to FIG. 1(c) are side views of the package structure, and FIG. 1(d) is a top view of the package structure. As shown in FIG. 1(a) to FIG. 1(d), the package structure may include a photonics integrated circuit 110, a fiber array 120, and a substrate 130.

A spot size converter is disposed in the photonics integrated circuit 110. The spot size converter includes a cantilever beam waveguide 113 and a first groove 112. The fiber array 120 includes a fiber 121. The photonics integrated circuit 110 is disposed on an upper surface of the substrate 130, the fiber array 120 is disposed on the upper surface of the substrate 130, and the cantilever beam waveguide 113 is coupled to the fiber 121.

The cantilever beam waveguide 113 may specifically be a suspended part of a waveguide 111 relative to the first groove 112. Alternatively, the cantilever beam waveguide 113 and the waveguide 111 may be discrete optical parts, and optical elements such as a coupler and a beam splitter are disposed between the cantilever beam waveguide 113 and the waveguide 111. This is not limited in this application. There is a gap between the cantilever beam waveguide 113 and the first groove 112, or it may be understood that there is a pitch between the cantilever beam waveguide 113 and the first groove 112, or there is no contact between the cantilever beam waveguide 113 and the first groove 112. In addition, the first groove may also be referred to as an undercut (undercut).

The fiber array 120 may include a base 122 and a lid 123. A second groove may be disposed in the base 122, and the second groove may be a V-groove (V-groove). The V-groove is configured to accommodate the fiber. The base 122 and the lid 123 are snap-fitted, and a snap-fit connection manner may be bonding by using glue or another manner. That the fiber array 120 is disposed on the upper surface of the substrate 130 may be specifically shown in FIG. 1(a), and means that the lid 123 is disposed on the upper surface of the substrate 130; or may be shown in FIG. 1(b), and means that the lid 123 is disposed on the upper surface of the substrate 130. Alternatively, the fiber array 120 may be assembled in another manner. This is not limited in this application.

A coupling connection between the cantilever beam waveguide 113 and the fiber 121 may specifically be a direct optical connection or an indirect optical connection between the cantilever beam waveguide 113 and the fiber 121. The indirect optical connection may mean that an adapter, a lens, a polymer waveguide, or the like is disposed between the cantilever beam waveguide 113 and the fiber 121. In the case shown in FIG. 1(a) to FIG. 1(d), the coupling connection between the cantilever beam waveguide 113 and the fiber 121 specifically means that the tail end of the cantilever beam waveguide 113 is connected to the tail end of the fiber 121, or may be understood as that an end face of the cantilever beam waveguide 113 is connected to an end face of the fiber 121, or the cantilever beam waveguide 113 is aligned with or aligned with the fiber 121. Therefore, in a packaging solution in which the cantilever beam waveguide is directly coupled to the fiber, disposing the photonics integrated circuit and the fiber array on an upper surface of a same substrate avoids a problem that excessively large local stress occurs in a coupling area of the cantilever beam waveguide and the fiber due to the temperature change, displacement, external force application, or the like, thereby reducing a packaging loss.

The photonics integrated circuit 110 may be mainly made of a silicon material, and a cantilever beam waveguide part disposed in the photonics integrated circuit 110 may be glass, that is, a silicon dioxide material. The lid 123 and the base 122 in the fiber array 120 may be made of glass. The spot size converter expands a spot size of the cantilever beam waveguide 113 to 9 µm that is the same as that of the fiber 121.

In the package structure shown in FIG. 1(a) to FIG. 1(d), disposing the photonics integrated circuit and the fiber array on the upper surface of the substrate together and avoiding using an additional support part like a spacer can ensure mechanical stability of the package structure, and reduce a change in stress near the cantilever beam waveguide caused by a temperature change, displacement, external force application, or the like in the package structure, thereby implementing low-stress packaging.

In some implementations, a thermal expansion rate of the substrate 130 may be 0.3 ppm/°C to 10 ppm/°C, to ensure that a material used by the substrate matches expansion rates of materials used by the fiber array and the photonics integrated circuit, and ensure that the package structure can ensure low stress of the package structure in a "three-temperature" environment. The "three-temperature" specifically refers to a low temperature of -40°C, a room temperature of 25°C, and a high temperature of 85°C. The material of the substrate 130 may be fused silica, an Invar alloy, a Kovar alloy, silicon carbide, or silicon. In some implementations, the material of the substrate 130 may be aluminum oxide, aluminum nitride, or a tungsten copper alloy, and the thermal expansion rate of the substrate 130 may be 4 ppm/°C to 8 ppm/°C, to ensure that the material used by the substrate matches the expansion rates of the materials used by the fiber array and the photonics integrated circuit, ensure that the package structure can ensure the low stress of the package structure in the "three-temperature" environment, and ensure mechanical stability of the package structure.

In some implementations, as shown in FIG. 1(c), a first bonding portion 140 is disposed at a coupling position between the cantilever beam waveguide and the fiber. A refractive index of the first bonding portion 140 ranges from 1.35 to 1.45, so that transmission of an optical signal is limited between the cantilever beam waveguide and the fiber, and the packaging loss is further reduced. A modulus of the first bonding portion 140 may be less than 1 MPa, to implement a "soft connection" between the cantilever beam waveguide and the fiber, reduce local stress, and avoid a packaging loss of the cantilever beam waveguide or the fiber caused by a temperature change, displacement, external force application, or the like in the package structure. A thermal expansion rate of the first bonding portion 140 may be less than 100 ppm/°C, to ensure that the package structure can ensure the low stress of the package structure in the "three-temperature" environment. The first bonding portion 140 may be made of a silicone material, to limit transmission of the optical signal between the cantilever beam waveguide and the fiber, implement the "soft connection" between the cantilever beam waveguide and the fiber, reduce the local stress, avoid an increase in the local stress of the cantilever beam waveguide or the fiber caused by the temperature change, displacement, external force application, or the like in the package structure, and ensure that the package structure can ensure the low stress of the package structure in the "three-temperature" environment.

In some implementations, as shown in FIG. 1(c), a second bonding portion 150 is disposed in the first groove; and the second bonding portion 150 is in contact with the cantilever beam waveguide, or the second bonding portion 150 wraps the cantilever beam waveguide. A modulus of the second bonding portion 150 may be less than 1 MPa, to protect the cantilever beam waveguide, reduce the local stress, and avoid mechanical damage to the cantilever beam waveguide caused by the temperature change, displacement, external force application, or the like. A refractive index of the second bonding portion 150 may range from 1.35 to 1.45, so that the optical signal is limited to be transmitted in the cantilever beam waveguide together with air in the first groove. A thermal expansion rate of the second bonding portion 150 may be less than 100 ppm/°C, to ensure that the second bonding portion generates large thermal expansion in the "three-temperature" environment, and avoid mechanical damage to the cantilever beam waveguide. The second bonding portion 150 may be made of a silicone material, to protect the cantilever beam waveguide, reduce the local stress, avoid mechanical damage to the cantilever beam waveguide caused by a temperature change, displacement, external force application, or the like. In addition, transmission of the optical signal is limited in the cantilever beam waveguide, and it is ensured that the second bonding portion generates large thermal expansion in the "three-temperature" environment, to avoid mechanical damage to the cantilever beam waveguide. A thickness of a second bonding portion located below the cantilever beam waveguide may be the same as a thickness of a second bonding portion located above the cantilever beam waveguide, to further ensure stress balance at the cantilever beam waveguide.

In some implementations, as shown in FIG. 1(c), a bonding layer 160 is disposed between the fiber array and the substrate, and/or the bonding layer 160 is disposed between the photonics integrated circuit and the substrate. A shrinkage rate of the bonding layer 160 may be less than 0.3%, to prevent the fiber array and/or the photonics integrated circuit from being shifted, and reduce the packaging loss. The bonding layer 160 may be made of epoxy resin or acrylic acid, to prevent the fiber array and/or the photonics integrated circuit from being shifted, and reduce the packaging loss.

In some implementations, as shown in FIG. 1(a) to FIG. 1(c), projections of the fiber 121 and the photonics integrated circuit 110 on the substrate 130 do not overlap, to avoid mechanical damage like a bend loss of the fiber caused by excessive extension of the fiber to the photonics integrated circuit, reduce stress between the cantilever beam waveguide and the fiber, and reduce the packaging loss.

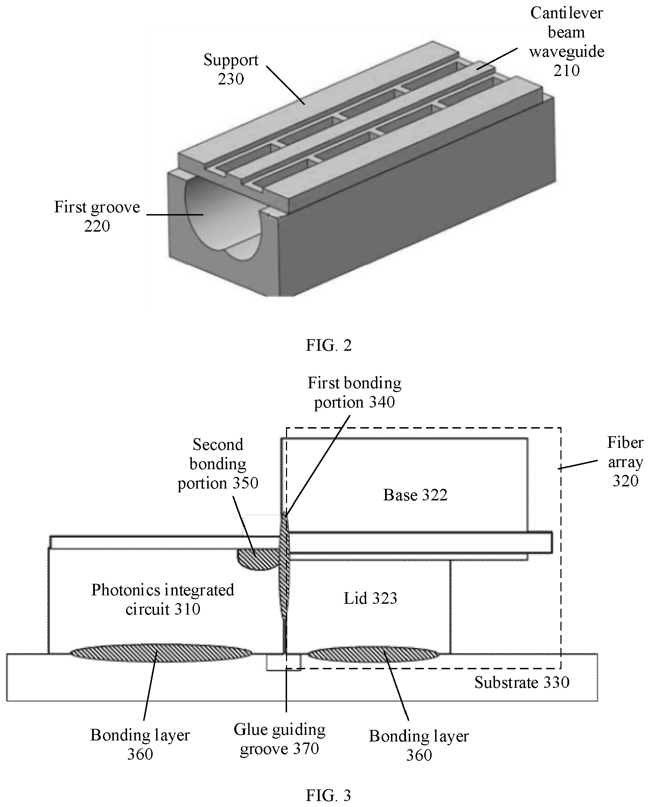

A specific process of the spot size converter shown in FIG. 1(a) to FIG. 1(d) is determined based on an actual situation. FIG. 2 shows a spot size converter according to an embodiment of this application. The spot size converter includes a cantilever beam waveguide 210, a first groove 220, and a support 230. The support 230 is configured to support the cantilever beam waveguide 210, so that the cantilever beam waveguide 210 is not in contact with the first groove 220, or may be understood as that the cantilever beam waveguide 210 is suspended relative to the first groove 220, to constrain an optical signal emitted from a fiber 121 in the cantilever beam waveguide 210 for transmission.

In some implementations, the spot size converter includes N cantilever beam waveguides. In this case, a transverse size of the first groove 220 may be correspondingly extended, and the support 230 is configured to support the N cantilever beam waveguides. One-to-one corresponding to the N cantilever beam waveguides of the spot size converter, a fiber array includes N fibers. A cantilever beam waveguide in the N cantilever beam waveguides is coupled to a corresponding fiber, and N is a positive integer. In some implementations, N is a positive integer greater than or equal to 2. When a package structure is a multi-channel package structure, a photonics integrated circuit and the fiber array are disposed on a same substrate, to improve stability of the package structure. This can avoid high stress generated on a coupling part between the N fibers and the N cantilever beam waveguides, and reduce a limitation on the fiber in the fiber array. According to the package structure in this application, a fiber with an outer diameter of 127 µm and an inner diameter of 125 µm may be used as a transmission medium of the optical signal, instead of using a conventional fiber with a size of 250 µm, to implement a high-density horizontal pitch (pitch) arrangement solution.

FIG. 3 is a diagram of another package structure according to an embodiment of this application. A photonics integrated circuit 310, a fiber array 320, and a substrate 330 that are included in the package structure in FIG. 3, a spot size converter disposed in the photonics integrated circuit, a first groove and a cantilever beam waveguide that are included in the spot size converter, and a fiber, a base 322, and a lid 323 that are included in the fiber array 320 are similar to those in FIG. 1(a) to FIG. 1(d). Details are not described herein again.

As shown in FIG. 3, in the package structure, a glue guiding groove 370 may be further disposed on the substrate 330, and the glue guiding groove 370 is located between the photonics integrated circuit 310 and the fiber array 320. The glue guiding groove 370 is configured to guide a flow when glue is dripped onto a first bonding portion 340 and a second bonding portion 350 in a packaging phase, to avoid pollution caused by contact between glue of the first bonding portion 340 and the second bonding portion 350 and glue of a bonding layer 360.

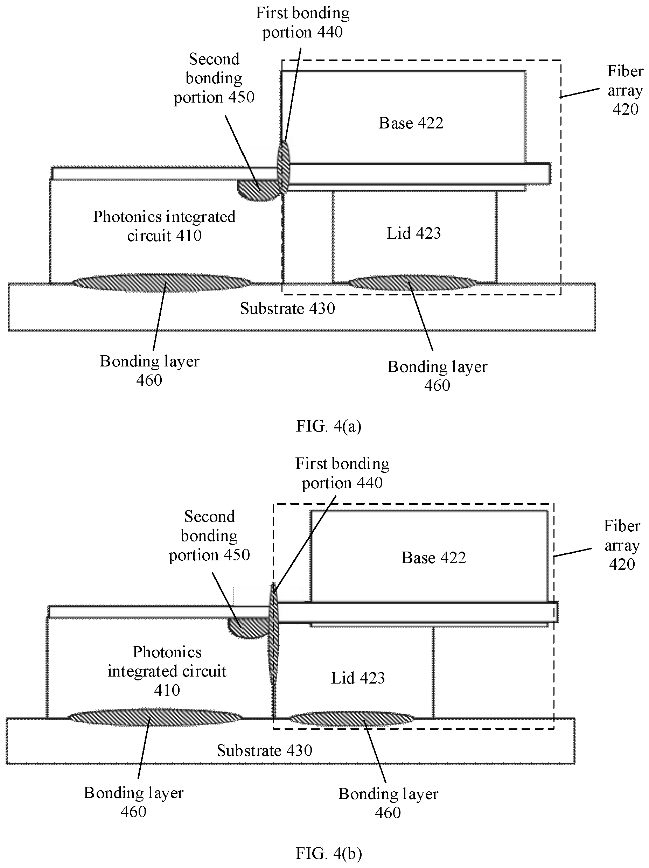

FIG. 4(a) to FIG. 4(c) are a diagram of another package structure according to an embodiment of this application. A photonics integrated circuit 410, a fiber array 420, and a substrate 430 that are included in the package structure in FIG. 4(a) to FIG. 4(c), a spot size converter disposed in the photonics integrated circuit, a first groove and a cantilever beam waveguide that are included in the spot size converter, and a fiber, a base 422, and a lid 423 that are included in the fiber array 420 are similar to those in FIG. 1(a) to FIG. 1(d). Details are not described herein again.

In some implementations, as shown in FIG. 4(a), there is a pitch between projections of the lid 423 and the photonics integrated circuit 410 on the substrate 430, and the fiber 421 extends at one end, adjacent to the photonics integrated circuit 410, outside the lid 423. The lid 423 is moved backwards, so that the fiber can be identified conveniently and a dispensing action can be performed conveniently in a fiber array preparation phase, thereby optimizing a preparation procedure. In addition, stress between the photonics integrated circuit and the fiber can be reduced, and a packaging loss can be reduced. In addition, when a first bonding portion 440, a second bonding portion 450, and a bonding layer 460 are disposed in the package structure, a bonding surface between the lid 423 and the photonics integrated circuit 410 in the first bonding portion 440 can be eliminated, thereby avoiding glue outflow and pollution caused by contact with glue in the bonding layer 460.

In some implementations, as shown in FIG. 4(b), there is a pitch between projections of the base 422 and the photonics integrated circuit 410 on the substrate 430, and the fiber 421 extends at one end, adjacent to the photonics integrated circuit 410, outside the base 422. The base 422 is moved backwards, so that stress between the cantilever beam waveguide and the fiber can be reduced, and a packaging loss can be reduced. In addition, when a first bonding portion 440, a second bonding portion 450, and a bonding layer 460 are disposed in the package structure, a bonding surface between the lid 423 and the photonics integrated circuit 410 in the first bonding portion 440 can be eliminated, thereby avoiding glue outflow and pollution caused by contact with glue in the bonding layer 460.

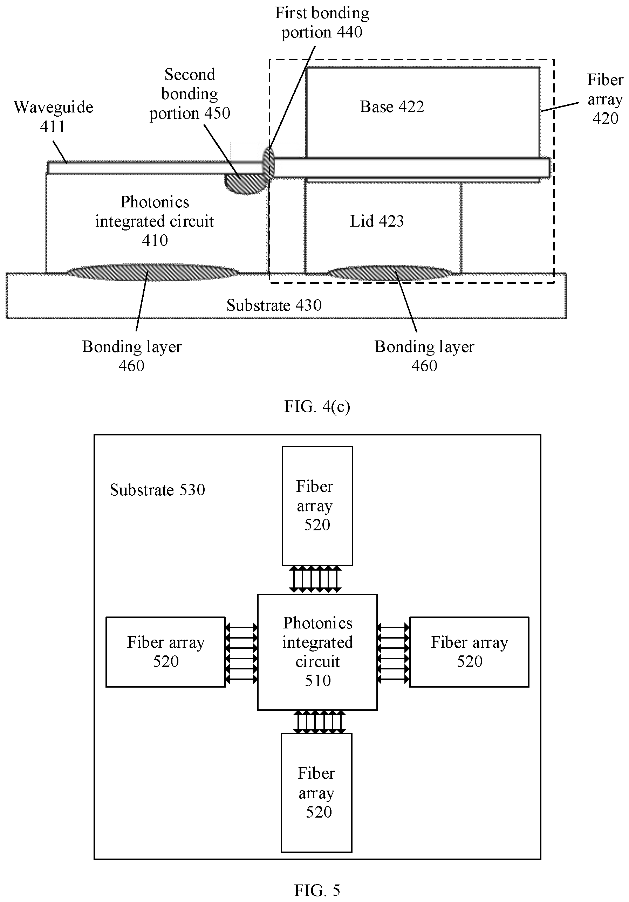

In some implementations, as shown in FIG. 4(c), there is a pitch between projections of the base 422 and the photonics integrated circuit 410 on the substrate 430, and there is a pitch between projections of the lid 423 and the photonics integrated circuit 410 on the substrate 430, and the fiber 421 extends at one end, adjacent to the photonics integrated circuit 410, outside the base 422 and the lid 423. The base 422 and the lid 423 are moved backwards, so that the fiber can be identified conveniently and a dispensing action can be performed conveniently in a fiber array preparation phase, thereby optimizing a preparation procedure. In addition, stress between the cantilever beam waveguide and the fiber can be reduced, and a packaging loss can be reduced. In addition, when a first bonding portion 440, a second bonding portion 450, and a bonding layer 460 are disposed in the package structure, a bonding surface between the lid 423 and the photonics integrated circuit 410 in the first bonding portion 440 can be eliminated, thereby avoiding glue outflow and pollution caused by contact with glue in the bonding layer 460.

FIG. 5 is a diagram of another package structure according to an embodiment of this application. As shown in FIG. 5, the package structure includes M fiber arrays 520, a photonics integrated circuit 510 includes M spot size converters, the M fiber arrays 520 one-to-one correspond to the M spot size converters, a fiber array in the M fiber arrays is coupled to a corresponding spot size converter, and M is a positive integer. In some implementations, M is a positive integer greater than or equal to 2, and the package structure may be a co-packaged optics (co-packaged optics, CPO) structure, to shorten a transmission distance of an optical signal, reduce a packaging loss, and reduce system costs and power consumption.

It should be understood that FIG. 5 shows only a case in which M is equal to 4, and should not constitute a limitation on a specific form of the package structure. It should be understood that FIG. 5 shows only a case in which the M fiber arrays 510 and the photonics integrated circuit 510 are disposed on an upper surface of a substrate 530. In addition, a part of the M fiber arrays 520 may alternatively be disposed on the upper surface of the substrate 530. This is not limited in this application.

In some implementations, a fiber array in the M fiber arrays includes one fiber, and a spot size converter in the M spot size converters includes one cantilever beam waveguide. In this case, the fiber array and the spot size converter are specifically used for single-channel optical signal transmission.

In some implementations, a fiber array in the M fiber arrays includes N fibers, a spot size converter in the M spot size converters includes N cantilever beam waveguides, and N is a positive integer greater than or equal to 2. Quantities of fibers included in the M fiber arrays may be the same or different. Correspondingly, quantities of cantilever beam waveguides included in the M template converters may be the same or different. In this case, the fiber array and the spot size converter are specifically used for multi-channel optical signal transmission.

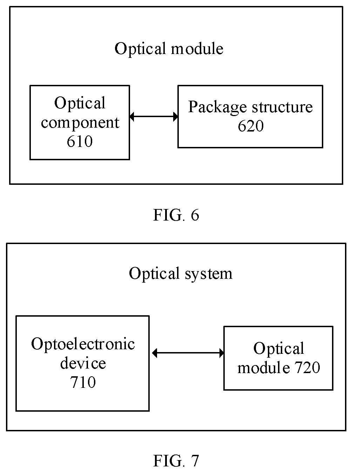

FIG. 6 is a diagram of an optical module according to an embodiment of this application. As shown in FIG. 6, the optical module may include an optical component 610 and a package structure 620. The optical component 610 is optically connected to the package structure 620, and the optical component 610 is configured to receive and/or send an optical signal. Specific settings of the package structure 620 are shown in FIG. 1(a) to FIG. 5. When the optical component 610 is configured to send the optical signal, the optical component 610 may include a light source, a modulator, a filter, and the like. When the optical component 610 is configured to receive the optical signal, the optical component 610 may include a processor, a detector, and the like. In some implementations, the optical component 610 includes light sources of a plurality of wavelengths, and correspondingly, the package structure 620 is configured to send and/or receive optical signals of a plurality of wavelengths.

The parts included in the optical component may be disposed in a photonics integrated circuit in the package structure, or the parts included in the optical component and a photonics integrated circuit and a fiber array in the package structure are discrete elements. A specific form of the optical module is determined based on an actual situation. An optical connection between the optical component 610 and the package structure 620 may be a direct optical connection or an indirect optical connection. The indirect optical connection may mean that optical elements such as a coupler and a beam splitter are disposed between the part in the optical component 610 and the photonics integrated circuit or the fiber array in the package structure 620.

In some implementations, the optical module further includes a printed circuit board (printed circuit board, PCB). The PCB is electrically connected to the photonics integrated circuit in the package structure 620. A specific electrical connection manner may be wire soldering, flexible printed circuit soldering, bonding wire bonding, or the like. The PCB may be configured to process an optical signal sent and/or received by the photonics integrated circuit. For example, the PCB is configured to send an electrical signal, and the photonics integrated circuit is configured to convert the electrical signal into an optical signal for sending. Alternatively, the photonics integrated circuit is configured to receive an optical signal, and the PCB is configured to convert the optical signal into an electrical signal and process the electrical signal.

FIG. 7 is a diagram of an optical system according to an embodiment of this application. As shown in FIG. 7, the optical system may include an optoelectronic device and the optical module shown in FIG. 6. The optoelectronic device may be any one of an optical switch, a fiber router, or a fiber network interface card, and the optoelectronic device is connected to the optical module.

The optoelectronic device may include a plurality of ports, each of the plurality of ports corresponds to one optical transmission channel, and a port in the plurality of ports is connected to the optical module, to implement multi-channel and high-rate data transmission. The optical switch may be configured to implement data exchange between a plurality of optical transmission channels. The fiber router may be configured to convert an optical signal into a data signal, and implement forwarding and route selection of the data signal. The fiber network interface card may be used in an Ethernet network to implement a connection between a computer and a fiber.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A package structure, comprising a photonics integrated circuit, a fiber array, and a substrate, wherein
a spot size converter is disposed in the photonics integrated circuit, the spot size converter comprises a cantilever beam waveguide and a first groove, and there is a gap between the cantilever beam waveguide and the first groove;
the fiber array comprises a fiber, a base, and a lid, wherein the base comprises a second groove, the second groove is configured to accommodate the fiber, and the lid is snap-fitted to the base; and
the photonics integrated circuit is disposed on an upper surface of the substrate, the base or the lid is disposed on the upper surface of the substrate, and the cantilever beam waveguide is coupled to the fiber.

2. The package structure according to claim 1, wherein that the cantilever beam waveguide is coupled to the fiber comprises: a tail end of the cantilever beam waveguide is coupled to a tail end of the fiber.

3. The package structure according to claim 1 or 2, wherein projections of the fiber and the photonics integrated circuit on the substrate do not overlap.

4. The package structure according to any one of claims 1 to 3, wherein
there is a pitch between projections of the base and the photonics integrated circuit on the substrate, and the fiber extends at one end, adjacent to the photonics integrated circuit, outside the base; or
there is a pitch between projections of the lid and the photonics integrated circuit on the substrate, and the fiber extends at one end, adjacent to the photonics integrated circuit, outside the lid; or
there is a pitch between projections of the base and the photonics integrated circuit on the substrate, there is a pitch between projections of the lid and the photonics integrated circuit on the substrate, and the fiber extends at one end, adjacent to the photonics integrated circuit, outside the base and the lid.

5. The package structure according to any one of claims 1 to 4, wherein
a material of the substrate is fused silica, an Invar alloy, a Kovar alloy, silicon carbide, silicon, aluminum oxide, aluminum nitride, or a tungsten copper alloy; and/or
a thermal expansion rate of the substrate is 0.3 ppm/°C to 10 ppm/°C.

6. The package structure according to any one of claims 1 to 5, wherein a first bonding portion is disposed at a coupling position between the cantilever beam waveguide and the fiber, wherein
the first bonding portion is made of silicone; and/or
a modulus of the first bonding portion is less than 1 MPa; and/or
a refractive index of the first bonding portion ranges from 1.35 to 1.45; and/or
a thermal expansion rate of the first bonding portion is less than 100 ppm/°C.

7. The package structure according to any one of claims 1 to 6, wherein a second bonding portion is disposed in the first groove; and the second bonding portion is in contact with the cantilever beam waveguide, or the second bonding portion wraps the cantilever beam waveguide, wherein
the second bonding portion is made of silicone; and/or
a modulus of the second bonding portion is less than 1 MPa; and/or
a refractive index of the second bonding portion ranges from 1.35 to 1.45; and/or
a thermal expansion rate of the second bonding portion is less than 100 ppm/°C.

8. The package structure according to any one of claims 1 to 7, wherein a bonding layer is disposed between the fiber array and/or the photonics integrated circuit and the substrate, wherein
the bonding layer is made of epoxy resin or acrylic acid; and/or
a shrinkage rate of the bonding layer is less than 0.3%.

9. The package structure according to any one of claims 1 to 8, wherein a glue guiding groove is disposed on the substrate, and the glue guiding groove is located between the photonics integrated circuit and the fiber array.

10. The package structure according to any one of claims 1 to 9, wherein the spot size converter comprises N cantilever beam waveguides, the fiber array comprises N fibers, the N cantilever beam waveguides one-to-one correspond to the N fibers, a cantilever beam waveguide in the N cantilever beam waveguides is coupled to a fiber corresponding to the cantilever beam waveguide, and N is a positive integer.

11. The package structure according to any one of claims 1 to 10, wherein
the package structure comprises M fiber arrays, the photonics integrated circuit comprises M spot size converters, the M fiber arrays one-to-one correspond to the M spot size converters, a fiber array in the M fiber arrays is coupled to a corresponding spot size converter, and M is a positive integer.

12. An optical module, comprising the package structure according to any one of claims 1 to 11 and an optical component, wherein the optical component is optically connected to the package structure, and the optical component is configured to receive and/or send an optical signal.

13. An optical system, comprising an optoelectronic device and the optical module according to claim 12, wherein the optoelectronic device is connected to the optical module, and the optoelectronic device is any one of an optical switch, a fiber router, and a fiber network interface card.
